# EUROPEAN PATENT APPLICATION

(11) **EP 3 460 004 A1**
(43) Date of publication of application: **27.03.2019**
(21) Application number: 17799561.0
(22) Date of filing: 31.03.2017
(51) Int. Cl.: C08L 81/02, C08G 75/0209, C08K 3/34, C08K 7/14, C08K 3/22, C08K 7/24

(54) **POLYARYLENE SULFIDE RESIN COMPOSITION HAVING EXCELLENT CHEMICAL RESISTANCE**

(30) Priority: 19.05.2016 KR 20160061468
(71) Applicant: Initz Co., Ltd., Nam-gu, Ulsan 44784 (KR)
(72) Inventor: KIM, Hae-ri, Seongnam-si Gyeonggi-do 13504 (KR); SHIN, Jong-Wook, Suwon-si Gyeonggi-do 16316 (KR); AHN, Byung-woo, Incheon 21931 (KR)
(74) Representative: dompatent von Kreisler Selting Werner - Partnerschaft von Patent- und Rechtsanwälten mbB
(86) International application number: PCT/KR2017/003544
(87) International publication number: WO 2017/200203

(57) **Abstract**

The present invention provides a resin composition comprising a polyarylene sulfide, a glass fiber, a mercapto silane compound, and hydrotalcite, the resin composition having a chlorine content of 100 ppm or less and a sodium content of 50 ppm or less. The resin composition is excellent in chemical resistance against organic solvents and antifreeze resistance while maintaining excellent mechanical and thermal properties inherent to PAS, and thus the resin composition can be widely used in various fields requiring excellent chemical resistance and antifreeze resistance.

## Description

### Technical Field

The present invention relates to a polyarylene sulfide resin composition having excellent chemical resistance and antifreeze resistance.

### Background Art

Polyarylene sulfide (also, referred to as "PAS") is a thermoplastic resin whose demand for use in steel substitute and structural material is increasing due to its high temperature heat stability, flame retardancy and low moisture content. Particularly, polyphenylene sulfide (also, referred to as "PPS") is an engineering plastic having very excellent chemical resistance due to its structural characteristics, and is widely used in automobile parts, electric parts, or electronic parts which could not be replaced with conventional polyesters and polyamides.

The preparation of conventional PPS has been performed by a solution polymerization method using p-dichlorobenzene and sodium sulfide as raw materials in a polar organic solvent such as N-methyl pyrrolidone. However, the PPS produced by such solution polymerization method produced a large amount of reactive low-molecular substances such as oligomers and salt-type by-products. Since such oligomers and salt-type by-products may deteriorate the performance of electric and electronic parts, an additional washing or drying process is required to remove the salt-type by-products and oligomers (*see* U.S. Patent Nos. 2,513,188 and 2,583,941). In addition, the PPS prepared by the solution polymerization method as described above had a problem of low chemical resistance due to the presence of random unstable functional groups at the end of the main chain.

### Disclosure of Invention

### Technical Problem

Accordingly, an object of the present invention is to provide a resin composition comprising PAS which contains a trace amount of oligomers and salt-type by-products or does not contain any of them, and thus does not require an additional washing or drying process.

Another object of the present invention is to provide a molded article prepared by molding the resin composition.

### Solution to Problem

To achieve the objects, the present invention provides a resin composition comprising:
a PAS having a chlorine content of 100 ppm or less and a sodium content of 50 ppm or less;
a glass fiber;
a mercaptosilane compound; and
a hydrotalcite.

Also, the present invention provides a molded article prepared by molding the resin composition.

### Advantageous Effects of Invention

The resin composition according to the present invention has improved chemical resistance and antifreeze resistance against organic solvent without compromising excellent mechanical and thermal properties unique to PAS. Thus, it can be widely used in various fields requiring excellent chemical resistance and antifreeze resistance.

### Best Mode for Carrying out the Invention

The present invention provides a resin composition comprising a PAS having a chlorine content of 100 ppm or less and a sodium content of 50 ppm or less, a glass fiber, a mercaptosilane compound and a hydrotalcite.

The PAS of the present invention may be prepared by melt polymerization of reactants comprising a diiodo aromatic compound and sulfur in order to limit the contents of chloride and sodium, i.e., salt-type to the above ranges. Since the PAS prepared by the melt polymerization method does not use a material containing chloride and sodium, the content of chloride and sodium is theoretically 0 ppm. However, a trace amount of chloride or sodium may be contained by impurities during post-processing such as extrusion and injection.

The diiodo aromatic compound for use in the melt polymerization may be at least one selected from the group consisting of diiodobenzene (DIB), diiodonaphthalene, diiodobiphenyl, diiodobisphenol, and diiodobenzophenone, but is not limited thereto. Also, the diiodo aromatic compound bonded by a substituent such as an alkyl group, a sulfone group, or the like, and a diiodo aromatic compound in which an oxygen or nitrogen atom is contained in the aromatic group may be used. Further, the diiodo aromatic compound has various isomers of the diiodo compound according to the position to which an iodine atom is attached, and among these isomers, a compound in which an iodine atom is attached to the para position such as para-diiodobenzene (pDIB), 2,6-diiodonaphtalene, or p,p'-diiodobiphenyl is more suitabe.

The form of a sulfur element reacting with the diiodo aromatic compound is not particularly limited. Generally, the sulfur element exists in a ring form in which 8 atoms are linked (cyclooctasulfur, Ss) at room temperature, and any other commercially available sulfur in a solid or liquid state not having the above structure may also be used without particular limitation.

Also, the reactants comprising a diiodo aromatic compound and sulfur element may further comprise a polymerization initiator, a stabilizer, or a mixture thereof. Specifically, the polymerization initiator may comprise at least one selected from the group consisting of 1,3-diiodo-4-nitrobenzene, mercaptobenzothiazole, 2,2'-dithiobenzothiazole, cyclohexyl-benzothiazole sulfenamide, and butyl-benzothiazole sulfonamide, but is not limited thereto. Also, the stabilizer is not particularly limited as long as it is a stabilizer commonly used in polymerization reaction of resins.

Meanwhile, during the melt polymerization of the reactants, a polymerization terminator may be added. The polymerization terminator is not particularly limited as long as it is a compound which can stop the polymerization by removing the iodine groups contained in the polymer to be manufactured. Specifically, polymerization terminator may be at least one selected from the group consisting of diphenyls, benzophenones, monoiodoaryls, benzothiazoles, benzothiazole sulfenamides, thiurams, dithiocarbamates. More specifically, polymerization terminator may be at least one selected from the group consisting of diphenyl sulfide, diphenyl ether, dibenzothiazole disulfide, iodobiphenyl, iodophenol, iodoaniline, iodobenzophenone, 2-mercaptobenzothiazole, 2,2'-dithiobisbenzothiazole, N-cyclohexylbenzothiazole-2-sulfenamide, 2-morpholinothiobenzothiazole, N,N-dicyclohexylbenzothiazole-2-sulfenamide, tetramethylthiuram monosulfide, tetramethylthiuram disulfide, zinc dimethyldithiocarbamate, zinc diethyldithiocarbamate, and diphenyl disulfide.

Meanwhile, the addition timing of the polymerization terminator may be determined according to the target viscosity or the target molecular weight of the PAS. Specifically, the polymerization terminator may be added at a point at which 70 to 100 wt% of the diiodoaromatic compound contained in the initial reactants is reacted and exhausted.

The melt polymerization reaction condition as described above is not particularly limited as long as the polymerization of the reactants containing the diiodo aromatic compound and the sulfur compound can be initiated. For example, the melt polymerization may be carried out under elevated temperature and reduced pressure conditions. Specifically, the temperature elevation and pressure reduction is performed by changing initial reaction conditions, e.g., a temperature of 180 to 250°C and a pressure of 50 to 450 torr, to final reaction conditions, e.g., a temperature of 270 to 350°C and a pressure of 0.001 to 20 torr. More specifically, the polymerization may be carried out with final reaction conditions, e.g., a temperature of about 280 to 320°C and a pressure of about 0.1 to 1.5 torr. The reaction may be carried out for one (1) to thirty (30) hours.

Meanwhile, the preparation method of PAS may further comprise a step of melt blending reactants containing a diiodo aromatic compound and a sulfur element prior to the melt polymerization. Such melt blending is not particularly limited as long as the mixture can be melt blended. For example, it may be carried out at a temperature of 130 to 200°C, specifically 160 to 190°C. When the melt blending step is carried out prior to the melt polymerization, the melt polymerization to be performed later may be more easily carried out.

According to an embodiment of the present invention, melt polymerization in the preparation method of PAS may be carried out in the presence of a nitrobenzene-based catalyst. Also, in case that the melt blending step is further included prior to the melt polymerization reaction as described above, the nitrobenzene-based catalyst may be added in the melt blending step. Examples of the nitrobenzene-based catalyst may include, but not limited to, 1,3-diiodo-4-nitrobenzene or 1-iodo-4-nitrobenzene.

The PAS may comprise main chain-bound iodine and free iodine. The free iodine may be generated during the polymerization step of the reactants containing the diiodo aromatic compound and the sulfur as described above, and encompass iodine molecules, iodine ions, iodine radicals, and the like, which remain in a state chemically separated from the PAS finally formed. Specifically, the PAS may contain 10 to 10,000 ppm of iodine and free iodine. More specifically, the PAS may contain 10 to 5,000 ppm of iodine and free iodine. The content of main chain-bound iodine and free iodine may be measured by heat-treating PAS at a high temperature and then performing quantification using ion chromatography.

The PAS may have a number average molecular weight of 5,000 to 50,000, 8,000 to 40,000, or 10,000 to 30,000. Also, the PAS may have a polydispersity, defined as the ratio of weight average molecular weight to number average molecular weight, of about 2.0 to 4.5, about 2.0 to about 4.0, or about 2.0 to about 3.5.

The PAS may have a melt viscosity of 10 to 50,000 poise, 100 to 20,000 poise, or about 300 to 10,000 poise at 300°C.

The PAS may have a melting point of about 265 to 290°C, about 270 to 285°C, or about 275 to 283°C.

The resin composition may comprise 40 to 70 wt% of PAS based on the total weight of the resin composition. Specifically, it may comprise 50 to 65 wt% of PAS based on the total weight of the resin composition.

The glass fiber may serve to improve heat resistance and mechanical strength of the resin composition. The glass fiber may have an average diameter of 6 to 15 µm and an average length of 2 to 5 mm.

When the surface-treated glass fiber is used, the interfacial adhesion between the PAS and the glass fiber is improved. The surface treatment may be carried out using a silane having an epoxy group, an amino group, or both. Specifically, the glass fiber may be an alumino-borosilicate glass fiber.

The glass fiber may be contained in an amount of 20 to 55 wt% based on the total weight of the resin composition. Specifically, the glass fiber may be contained in an amount of 30 to 50 wt% based on the total weight of the resin composition.

The mercaptosilane compound is a physical property reinforcing agent, which improves the interfacial adhesion of the resin composition by enhancing compatibility between the PAS and the glass fiber. Specifically, the mercaptosilane compound may be selected from the group consisting of 2-mercaptoethyl trimethoxy silane, 3-mercaptopropyl trimethoxy silane, 3-mercaptopropyl triethoxy silane, 2-mercaptoethyl tripropoxy silane, 2-mercaptoethyl tributoxy silane, 2-mercaptoethyl tri sec. butoxy silane, 3-mercaptopropyl triisopropoxy silane, 3-mercaptopropyl trioctoxy silane, 2-mercaptoethyl tri 2'-ethylhexoxy silane, 2-mercaptoethyl dimethoxy ethoxy silane, 3-mercaptopropyl dimethoxy methyl silane, 3-mercaptopropyl methoxy dimethyl silane, 3-mercaptopropyl dimethoxy methylmercaptosilane, 3-mercaptopropyl methoxy di(methylmercapto) silane, 3-mercaptopropyl methoxy methyl methylmercaptosilane, 2-mercaptoethyl tris(methylmercapto) silane, 2-mercaptoethyl tris(isopropylmercapto) silane, 3-mercaptopropyl tributylmercaptosilane, 3-mercaptopropyl tris(octylmercapto) silane, 3-mercaptopropyl cyclohexoxy dimethyl silane, 4-mercaptobutyl trimethoxy silane, 3-mercaptocyclohexyl trimethoxy silane, 12-mercaptododecyl trimethoxy silane, 18-mercaptooctadecyl trimethoxy silane, 18-mercaptooctadecyl methoxy dimethylsilane, 2-mercaptoethyl tripropoxy silane, 3-mercaptopropyl tripropoxy silane, 4-mercaptobutyl tripropoxy silane and a combination thereof. Specifically, the mercaptosilane compound may be selected from 3-mercaptopropyl trimethoxy silane, 3-mercaptopropyl triethoxy silane, and a combination thereof.

In addition, the mercaptosilane compound may be in the form of a dry silane. The dry silane is prepared by impregnating a porous inorganic substance having micro pores with a liquid silane, and has the advantage of easy processability. The silane may be contained in the dry silane in an amount of 50 to 80%, specifically 60 to 75%, based on the total weight of the dry silane.

The resin composition may comprise 0.01 to 1.5 wt% of a mercaptosilane compound based on the total weight of the resin composition. Specifically, it may comprise 0.05 to 1.0 wt% of a mercaptosilane compound based on the total weight of the resin composition.

The hydrotalcite serves to improve the chemical resistance and antifreeze resistance of the resin composition by capturing the iodine or ionic form impurities remaining in the PPS. The metal-based stearic acid which can perform the identical function is difficult to be used in a resin composition comprising PAS due to its low melting point. Meanwhile, due to high temperature heat stability, hydrotalcite does not deteriorate physical property of PAS but may reduce iodine or ionic form impurities.

The hydrotalcite may be magnesium aluminum hydroxide carbonate hydrate, which is an inorganic substance having an ion exchange effect, and its kind is not limited. Specifically, the hydrotalcite may comprise MgO and Al₂O₃ in a weight ratio ranging from 3.0: 1 to 5.0: 1. In addition, the hydrotalcite may have an average particle diameter of 0.3 to 0.8 µm. More specifically, the hydrotalcite may comprise MgO and Al₂O₃ in a weight ratio ranging from 3.5: 1 to 5.0: 1, and may have an average particle diameter of 0.3 to 0.6 µm.

The hydrotalcite may be contained in an amount of 0.05 to 5.0 wt% based on the total weight of the resin composition. Specifically, the hydrotalcite may be contained in an amount of 0.1 to 2.0 wt% based on the total weight of the resin composition.

The resin composition may comprise 40 to 70 wt% of PAS, 20 to 55 wt% of a glass fiber, 0.01 to 1.5 wt% of a mercaptosilane compound, and 0.05 to 5.0 wt% of hydrotalcite based on the total weight of the resin composition.

The PAS may comprise 10 to 10,000 ppm of main chain-bound iodine or free iodine, and the glass fiber may be an alumino-borosilicate glass fiber, and the hydrotalcite may have an average particle diameter of 0.3 to 0.8 µm.

The resin composition may further comprise a component selected from the group consisting of a heat stabilizer, a lubricant, an antistatic agent, a nucleating agent, a slipping agent, a pigment and any combination thereof.

The resin composition may have a tensile strength change ratio of less than 10% as measured after immersing an injection-molded specimen in a solution containing ethylene glycol and water in a volume ratio of 1: 1 at 150°C for 3,000 hours.

The present invention also provides a molded article prepared by molding the resin composition as described above. Specifically, the molded article may be an automobile part, an electric part, or an electronic part.

The molded article may be manufactured by molding the resin composition of the present invention by a method known in the art such as biaxial extrusion, etc. The molded article may be in various forms such as, for example, a film, a sheet, or a fiber. In addition, the molded article may be an injection molded article, an extrusion molded article, or a blow molded article.

Specifically, in case that the molded articles are prepared by injection molding, the mold temperature may be about 130°C or higher. In case that the molded articles are in film or sheet forms, they may be manufactured as various films or sheets by a non-orientation method, a uniaxial orientation method, a biaxial orientation method, and the like. In case that the molded articles are fibers, they may be various kinds of fibers such as a non-drawn fiber, a drawn fiber, or an ultra-drawn fiber, etc., and may be used as a fabric, knitted goods, a non-woven fabric (spunbond, meltblow, or staple), a rope, or a net. The molded articles may be used as electric or electronic parts such as computer parts, building materials, automobile parts, machine parts, basic commodities, coatings in contact with chemicals or an industrial fiber requiring chemical resistance, etc.

### Mode for the Invention

Hereinafter, the present invention is explained in detail by Examples. The following Examples are intended to further illustrate the present invention without limiting its scope.

### Preparation Example 1: Preparation of PPS 1

5,130 g of p-iodobenzene (p-DIB) and 450 g of sulfur were put into a 5 L reactor equipped with a thermocouple which can measure the internal temperature of the reactor and a vacuum line capable of nitrogen purging and vacuumizing. The reactor was heated to 180°C to completely melt blend p-DIB and sulfur, and then the polymerization reaction was carried out under the condition of the stepwise temperature increase and pressure reduction. Specifically, the temperature increase and pressure reduction were performed by changing an initial reaction condition, i.e., a temperature of 220°C and a pressure of 350 torr, and a final reaction condition, i.e., 300°C and 0.6 to 0.9 torr, while feeding 19 g of sulfur seven times. The degree of progress of the polymerization reaction was calculated as a relative ratio of the present viscosity to the target viscosity by the formula"(current viscosity/ target viscosity) × 100%". The target viscosity was 2,000 poise. The current viscosity was measured by taking a sample during the polymerization and measuring it with a viscometer. When the polymerization reaction proceeded to 80%, 35 g of diphenyl disulfide was added as a polymerization terminator and the reaction was carried out for additional 1 hour. Thereafter, vacuum was gradually applied at 0.1 to 0.5 torr to reach a target viscosity of 2,000 poise and then the reaction was terminated, to produce polyphenylene sulfide resin (PPS 1). The resulting resin was made into the form of pellets using a small-sized strand cutter.

With result to the PPS 1, melting point (Tm), number average molecular weight (Mn), polydispersity index (PDI), melt viscosity (MV), and the content of main chain-bound iodine and free iodine in the following manner. As a result, PPS 1 had an MV of 2,150 poise, a melting point of 280°C, an Mn of 17,420, a PDI of 2.7, and the iodine and free iodine content of 300 ppm.

### Melting point

Using a differential scanning calorimeter (DSC), a melting point was measured while the temperature was raised from 30 to 320°C at a speed of 10°C/minute, cooled to 30°C, and then raised again from 30 to 320°C at a speed of 10°C/minute.

### Number average molecular weight (Mn) and polydispersity index (PDI)

A sample was prepared by dissolving the PPS resin into 1-chloronaphthalene to obtain the PPS concentration of 0.4 wt% and stirred at 250°C for 25 minutes. Then, the sample was introduced at a flow rate of 1 mL/minute in the column of a high temperature gel permeation chromatography (GPC) system (210°C), polyphenylene sulfides having different molecular weights were sequentially separated, and the intensities corresponding to the molecular weight of the separated polyphenylene sulfide were measured by using an RI detector. After determining a calibration curve with a standard specimen (polystyrene) whose molecular weight was known, the number average molecular weight (Mn) and polydispersity index (PDI) of the PPS resin were calculated.

### Melt viscosity (MV)

Melt viscosity was measured at 300°C with a rotating disk viscometer. In the frequency sweep method, the angular frequency was measured from 0.6 rad/s to 500 rad/s, and the viscosity at 1.84 rad/s was defined as the MV.

### Content of main chain-bound iodine and free iodine (ppm)

To measure the content of main chain-bound iodine and free iodine (ppm), 50 mg of PPS resin was completely incinerated at 1,000°C. Thereafter, a sample was prepared using an automatic pretreatment apparatus (AQF) in which iodine in the combustion gas was ionized and dissolved in distilled water. The iodine (I) content of the PPS resin was measured using the calibration curve obtained by analyzing the sample by ion chromatography.

### Preparation Example 2: Preparation of PPS 2

PPS 2 resin was prepared by the same method as in Preparation Example 1, except that the target viscosity was 600 poise. PPS 2 had a MV of 715 poise, a melting point of 281°C, an Mn of 13,290, a PDI of 2.8, and main chain-bound iodine and free iodine content of 200 ppm.

### Preparation Example 3: Preparation of PPS 3

PPS 3 resin was prepared by the same method as in Preparation Example 1 except that the target viscosity was 3,600 poise. PPS 3 had a MV of 3,650 poise, a melting point of 281°C, an Mn of 19,010, a PDI of 2.9, and a main chain-bound iodine and a free iodine content of 270 ppm.

### Example 1: Preparation of resin composition

A resin composition was prepared by mixing 59.2 wt% of PPS 1 prepared in Preparation Example 1, 40 wt% of a glass fiber surface-treated with an epoxy silane (584, Jushi Group Co., Ltd.), 0.3 wt% of a mercaptosilane compound (Silquest A-189, Momentive Co.) and 0.5 wt% of hydrotalcite in a biaxial extruder,.

The biaxial screw extruder manufactured by SM platek having a diameter of 40 mm and an L/D of 44 was used. The process conditions were a screw speed of 250 rpm, a feed rate of 40 kg/hour, a barrel temperature of 280°C to 300°C, and a torque of 60%. Three feeders were used to inject the raw materials. The first feeder was used to feed the PPS 1 resin and the hydrotalcite; the second feeder to feed the mercaptosilane compound, and the third feeder to feed the glass fiber, for preparing the PPS resin composition.

### Examples 2 to 6 and Comparative Examples 1 to 11: Preparation of resin composition

A PPS resin composition was prepared by the same method as in Example 1, except that the components and their contents as shown in Tables 2 and 3 were used.

The components used in Examples 1 to 6 and Comparative Examples 1 to 11 are shown in Table 1 below.

**[Table 1]**

| Item | Property |
|---|---|
| PPS 1 | MV: 2,150 poise, Tm: 280°C, Mn: 17,420 |
| PPS 2 | MV: 715 poise, Tm: 281°C, Mn: 13,290 |
| PPS 3 | MV: 3,650 posie, Tm: 281°C, Mn: 19,010 |
| PPS 4 | Celanese 0205P4, MV: 700 poise, Tm : 280°C |
| PPS 5 | Solvay P-6, MI(380 g/10 min, @316°C, 5 kg), Tm: 281°C |
| PPS 6 | R4-220 (Solvay) |
| Glass fiber 1 | Jushi-584, average diameter 11 µm, average length 4.5 mm, aminosilane sizing |
| Glass fiber 2 | FT-562 (Owens Corning), diameter 10 µm, length 3.0mm, epoxy silane sizing |
| Mercaptosilane compound 1 | Momentive Co., Silquest A-189, 3-mercaptopropyl trimethoxy silane |
| Mercaptosilane compound 2 | Dry silane (A-189/calcium silicate = 7/3 weight ratio) |
| Epoxy silane compound | Momentive A-187, an epoxy silane compound. |
| Hydrotalcite | Average length 0.5 µm, MgO/Al₂O₃ weight ratio: 4.5, kyowa chemical Co., DHT-4A |
| Metal-based stearic acid | calcium stearate, Tm: 150°C |

**[Table 2]**

| Item (wt%) | Ex. 1 | Ex. 2 | Ex. 3 | Ex. 4 | Ex. 5 | Ex. 6 |
|---|---|---|---|---|---|---|
| PPS 1 | 59.2 | - | - | 59.2 | 59.0 | 59.0 |
| PPS 2 | - | 59.2 | - | - | - | - |
| PPS 3 | - | - | 59.2 | - | - | - |
| Glass fiber 1 | 40 | 40 | 40 | 40 | 40 | - |
| Glass fiber 2 | - | - | - | - | - | 40 |
| Mercaptosilane compound 1 | 0.3 | 0.3 | 0.3 | - | 0.5 | 0.5 |
| Mercaptosilane compound 2 | - | - | - | 0.3 | - | - |
| Hydrotalcite | 0.5 | 0.5 | 0.5 | 0.5 | 0.5 | 0.5 |

**[Table 3]**

| Item (wt%) | Comp. Ex. 1 | Comp. Ex. 2 | Comp . Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 |
|---|---|---|---|---|---|---|---|---|---|---|---|
| PPS 1 | 60 | - | - | 59.7 | 59.7 | 59.2 | - | - | - | - | 59.2 |
| PPS 2 | - | | - | - | - | - | - | - | - | - | - |
| PPS 3 | - | - | - | - | - | - | - | - | - | - | - |
| PPS 4 | - | 60 | - | - | - | - | 59.5 | - | 99.2 | - | - |
| PPS 5 | - | - | 60 | - | - | - | - | 59.5 | - | - | - |
| PPS 6 | - | - | - | - | - | - | - | - | - | 100 | - |
| Glass fiber | 40 | 40 | 40 | 40 | 40 | 40 | 40 | 40 | - | - | 40 |
| Mercaptosilane compound 1 | - | - | - | - | - | - | - | - | 0.3 | - | - |
| Epoxy silane compound | - | - | - | - | 0.3 | 0.3 | - | - | - | - | 0.3 |
| Magnesium oxide | - | - | - | - | - | 0.5 | 0.5 | 0.5 | 0.5 | - | - |
| Hydrotalcite | - | - | - | 0.3 | - | - | - | - | - | - | 0.5 |

### Experimental Example

The physical properties of the resin compositions prepared in Examples 1 to 6 and Comparative Examples 1 to 11 were measured according to the following methods, and the measurement results were shown in Tables 4 and 5. N.D. in Tables 4 and 5 represents "not detect", which refers to containing an amount less than the detection limit.

First, each resin composition prepared in Examples 1 to 6 and Comparative Examples 1 to 11 was injection-molded at 310°C, to prepare injection-molded specimens.

### (1) Tensile strength

The tensile strength of the injection-molded specimen was measured according to the ISO 527.

### (2) Impact strength

According to ISO 179, the impact strength of an injection-molded specimen having dimensions of 80 mm (length) x 10 mm (width) x 4 mm (thickness) was measured by an V-notch Charpy method.

### (3) Sodium content

10 mL of nitric acid, 10 mL of perchloric acid and 10 mL of sulfuric acid were added to 0.5 g of the injection-molded specimen and heated on a hot plate at about 350°C to acid-decompose the organic substance and evaporate the remaining acid except only a small amount. Then, the solution was cooled to room temperature, placed in a 25 mL volume flask and diluted by adding distilled water upto a 25 mL marking line of the volume flask, and then sodium (Na) content was measured by ICP-AES. Herein, N.D. refers to containing sodium in an amount less than 5 ppm, i.e., the quantitation limit.

### (4) Chlorine content

50 mg of the injection-molded specimen was heated at 1,000°C using AQF (Auto Quick Furnace) to completely incinerate any organic substances and the combustion gas was entrapped in an absorption solution (900 ppm of hydrogen peroxide solution) and auto-injected into Ion chromatography (Auto Quick Furnace) to measure the chlorine (Cl) content.

### (5) Flexural strength

The flexural strength of the injection-molded specimens was measured according to ISO 178.

### (6) Antifreeze resistance (LLC, long life coolant)

The injection-molded specimen was immersed in an automobile antifreeze (manufactured by Hyundai Mobis; product name: Antifreeze for 4 Seasons; and composition: 45% by volume of ethylene glycol (EG), 50% by volume of water and 5% by volume of a phosphate salt-based anti-corrosive agent) at 150°C for 3,000 hours, to measure the ratio of the tensile strength and flexural strength after immersion to those before immersion.

### (7) Chemical Resistance 1

The injection-molded specimens were immersed in chloroform and heat-treated at 50°C for 30 days, and the weight change ratio, i.e., weight after the heat-treatment to that before the heat-treatment was measured.

### (8) Chemical Resistance 2

The injection-molded specimens were immersed in a 10% (w/v) CaCl₂ aqueous solution and heat-treated at 80°C for 1,000 hours (41.6 days). The ratio of the flexural strength after the heat-treatment to that before the heat-treatment was measured when the flexural strength before the heat-treatment was set for 100%.

**[Table 4]**

| Item | Unit | Ex. 1 | Ex. 2 | Ex. 3 | Ex. 4 | Ex. 5 | Ex. 6 |
|---|---|---|---|---|---|---|---|
| Tensile strength | kgf/cm² | 1,850 | 1,620 | 1,860 | 1,830 | 1,880 | 1,870 |
| Impact strength (notched) | kJ/m² | 9.3 | 7.1 | 9.3 | 9.1 | 9.4 | 9.5 |
| Impact strength (un-notched) | kJ/m² | 46 | 33 | 47 | 46 | 49 | 48 |
| Chlorine content | ppm | N.D. | N.D. | N.D. | N.D. | N.D. | N.D. |
| Sodium content | ppm | N.D. | N.D. | N.D. | N.D. | N.D. | N.D. |
| LLC (tensile strength) | % | 95 | 93 | 94 | 94 | 94 | 95 |
| LLC (flexural strength) | % | 96 | 94 | 96 | 95 | 95 | 96 |
| Chemical resistance 1 | % | 1.4 | 1.3 | 1.4 | 1.1 | 1.1 | 1.2 |
| Chemical resistance 2 | % | 95 | 94 | 95 | 97 | 97 | 98 |

**[Table 5]**

| Item | Unit | Com.E x. 1 | Com.E x. 2 | Com.E x. 3 | Com.E x. 4 | Com. Ex. 5 | Com. Ex. 6 | Com.E x. 7 | Com.E x. 8 | Com.E x. 9 | Com.E x. 10 | Com.E x. 11 |
|---|---|---|---|---|---|---|---|---|---|---|---|---|
| Tensile strength | kgf/cm² | 1,730 | 1,780 | 1,590 | 1,530 | 1,890 | 1,620 | 1,720 | 1,540 | 1,780 | 1,820 | 1,800 |
| Impact strength (notched) | kJ/m 2 | 8.1 | 8.8 | 8.4 | 7.1 | 8.8 | 7.2 | 7.9 | 8.1 | 8.6 | 8.3 | 8.5 |
| Impact strength (un-notched) | kJ/m 2 | 39 | 42 | 40 | 32 | 45 | 34 | 37 | 36 | 44 | 43 | 42 |
| Chlorine content | ppm | N.D. | 1,130 | 3,120 | N.D. | N.D. | N.D. | 1,010 | 3,050 | 3,190 | 2,900 | N.D. |
| Sodium content | ppm | N.D. | 1,480 | 1,730 | N.D. | N.D. | N.D. | 1,470 | 1,710 | 1,650 | 1,200 | N.D. |
| LLC (tensile strength) | % | 71 | 58 | 73 | 62 | 77 | 77 | 62 | 78 | 75 | 79 | 81 |
| LLC (flexural strength) | % | 75 | 62 | 70 | 58 | 76 | 75 | 65 | 74 | 73 | 72 | 78 |
| Chemical resistance 1 | % | 2.0 | 7.2 | 8.2 | 1.9 | 1.9 | 1.7 | 4.8 | 6.2 | 5.4 | 6.4 | 2.1 |
| Chemical resistance 2 | % | 93 | 85 | 86 | 94 | 93 | 94 | 87 | 88 | 88 | 85 | 92 |

As shown in Tables 4 and 5 above, the resin compositions of Examples 1 to 6 contained a trace amount of chloride and sodium, and showed improved antifreeze resistance and chemical resistance property.

Examples 1 and 5 containing a mercaptosilane compound and hydrotalcite exhibited remarkably improved antifreeze resistance, tensile strength, impact strength and a strong chemical resistance against acid when compared with Comparative Example 1 containing neither mercaptosilane compound nor hydrotalcite.

Furthermore, Examples 1 to 6 had much lower chloride and sodium contents and showed improved antifreeze and chemical resistance when compared with Comparative Examples 2, 3, and 7 to 10 containing the solution-polymerized PPS.

In addition, Examples 1, 4, and 5 showed remarkably higher tensile strength, impact strength, and antifreeze resistance when compared with Comparative Example 4 containing no mercaptosilane compound,.

In addition, Comparative Examples 5 and 11 containing the epoxy silane compound instead of the mercaptosilane compound showed lower antifreeze resistance when compared with Example 1.

Furthermore, Comparative Example 6 containing magnesium oxide instead of hydrotalcite showed lower tensile strength, impact strength and antifreeze resistance when compared with Example 1.

## Claims

1. A resin composition comprising: a polyarylene sulfide having a chlorine content of 100 ppm or less and a sodium content of 50 ppm or less;
a glass fiber;
a mercaptosilane compound; and
a hydrotalcite.

2. The resin composition of claim 1, wherein the polyarylene sulfide comprises 10 to 10,000 ppm of main chain-bound iodine or free iodine.

3. The resin composition of claim 1, wherein the polyarylene sulfide has a number average molecular weight of 5,000 to 50,000 and a melt viscosity of 10 to 50,000 poise as measured by a rotating disk viscometer at 300°C.

4. The resin composition of claim 1, wherein the glass fiber has an average diameter of 6 to 15 µm and an average length of 2 to 5 mm.

5. The resin composition of claim 1, wherein the glass fiber is an alumino-borosilicate glass fiber.

6. The resin composition of claim 1, wherein the mercaptosilane compound is a dry silane which is prepared by impregnating a porous inorganic substance with a liquid silane.

7. The resin composition of claim 1, wherein the hydrotalcite has an average particle diameter of 0.3 to 0.8 µm.

8. The resin composition of claim 1, wherein the resin composition comprises 40 to 70 wt% of the polyarylene sulfide, 20 to 55 wt% of the glass fiber, 0.01 to 1.5 wt% of the mercaptosilane compound, and 0.05 to 5.0 wt% of the hydrotalcite based on the total weight of the resin composition.

9. The resin composition of claim 1, wherein:
the polyarylene sulfide comprises 10 to 10,000 ppm of main chain-bound iodine or free iodine;
the glass fiber is an alumino-borosilicate glass fiber; and
the hydrotalcite has an average particle diameter of 0.3 to 0.8 µm.

10. The resin composition of claim 1, wherein the resin composition further comprises a component selected from the group consisting of a heat stabilizer, a lubricant, an antistatic agent, a nucleating agent, a slipping agent, a pigment and any combination thereof.

11. The resin composition of claim 1, wherein the resin composition has a tensile strength change ratio of less than 10% as measured after immersing an injection-molded specimen in a solution containing ethylene glycol and water in a volume ratio of 1: 1 at 150°C for 3,000 hours.

12. A molded article prepared by molding the resin composition of any one of claims 1 to 11.

13. The molded article of claim 12, wherein the molded article is an automobile part, an electric part, or an electronic part.
